# EUROPÄISCHE PATENTSCHRIFT

(11) **EP 1 493 651 B1**
(45) Veröffentlichungstag und Bekanntmachung des Hinweises auf die Patenterteilung: **26.07.2006**
(21) Anmeldenummer: 04103005.7
(22) Anmeldetag: 28.06.2004
(51) Int. Cl.: B62D 25/16

(54) **Vorrichtung zur flexiblen Befestigung eines Kotschützers an einem Fahrzeug**
Device to flexibly attach a mudguard on a vehicle
Dispositif pour le rattachement flexible d'un guarde-boue sur un véhicule automobile

(30) Priorität: 01.07.2003 US 612718
(43) Veröffentlichungstag der Anmeldung: 05.01.2005
(73) Patentinhaber: DEERE & COMPANY, Moline, Illinois 61265-8098 (US)
(72) Erfinder: Rush, Randy Charles, 50701 Waterloo, Iowa (US); Rowland, Rodney Keith, 50677 Waverly, Iowa (US)
(74) Vertreter: Holst, Sönke

(56) Entgegenhaltungen:
- EP-A- 1 043 216
- DE-U- 20 013 118
- FR-A- 2 813 847
- US-A- 5 511 808

## Beschreibung

Die Erfindung betrifft eine Vorrichtung zur flexiblen Befestigung eines Kotschützers an einem Fahrzeug, welches lenkbare Räder an mindestens einer Fahrzeugachse aufweist. Die Vorrichtung umfasst ein starr ausgebildetes hohles Gehäuse, ein hohles elastisches Teil, ein hohles Rohr und eine Halteeinrichtung zur Halterung des Kotschützers. Das elastische Teil ist von dem Gehäuse aufnehmbar. Das hohle Rohr ist zumindest teilweise von dem elastischen Teil aufnehmbar und an dem elastischen Teil anbringbar. Die Halteeinrichtung ist an dem Kotschützer und an dem Rohr befestigbar.

Eine solche Vorrichtung ist aus der FR 2 813 847 A bekannt.

Viele landwirtschaftliche Nutzfahrzeuge, insbesondere Traktoren, weisen Kotschützer für die Vorderräder auf, welche das Spritzen von Schmutz, Wasser und Schnee kontrollieren bzw. verhindern. Solche Kotschützer können jedoch in Eingriff mit einer Karosseriewand oder dem Rahmen des Traktors kommen, wenn die Vorderräder einen großen Lenkwinkeleinschlag aufweisen. Hierdurch kann der Kotschützer oder die Karosseriewand beschädigt werden oder es kann der Lenkwinkeleinschlag und damit die Manövrierfähigkeit des Traktors begrenzt werden. Dies ist insbesondere für Traktoren zum Einsatz bei Reihenpflanzenkulturen problematisch, welche einen geringen Radabstand bzw. eine geringe Spurweite aufweisen.

Verschiedene Lösungen wurden vorgeschlagenen, um das Problem zu lösen, bei welchen der Kotschützer drehbar relativ zu einer Fahrzeugachse angeordnet ist. Beispielsweise zeigt die US 5,074,573 eine flexible Befestigung eines Kotschützers für ein lenkbares Rad, wobei der Kotschützer Arme aufweist, welche an einem Rohrstück befestigt sind. Das Rohrstück ist rotierbar bzw. drehbar auf einem Schaft beziehungsweise einer Welle angeordnet, welche an einem vorderen Teil des Rahmens befestigt ist. Eine Torsionsfeder kuppelt das Rohrstück an den Schaft. Diese Konstruktion weist einen separaten Anschlag auf, welcher an der Achse montiert ist und welcher mit dem Kotschützer-Arm zum Eingriff kommt, um einen Eingriff bzw. eine Kollision zwischen dem Kotschützer und der Karosseriewand zu verhindern. Diese Lösung erfordert von einem Bediener oder Mechaniker, den Anschlag in Abhängigkeit von der Größe oder Breite der verwendeten Reifen zu justieren.

Eine flexible Befestigung für einen Kotschützer an einem Fahrzeug mit lenkbaren Rädern an einer Achse ist in der US 5,511,808 offenbart. Die Befestigung des Kotschützers umfasst eine an der Fahrzeugachse befestigte Halterung, einen an dem Kotschützer befestigten Arm und ein zwischen der Halterung und dem Arm angeordnetes flexibles Federelement. Das Feder- bzw. Dämpfungselement ist um eine Torsionsachse flexibel rotierbar und in einer Richtung quer zur Torsionsachse verbiegbar. Das Federelement umfasst einen flexiblen Kern und zwei keilförmige Endkappen, welche an gegenüberliegenden Enden des Kerns befestigt sind. Das Federelement hat eine zentrale Achse, welche bezüglich einer von vorne nach hinten verlaufenden Achse des Rads nach hinten und weg vom Rad verkippbar ist.

Eine weitere Befestigung eines Kotschützers wird bei einer laufenden Produktion von John Deere Traktoren verwendet. Dieser Kotschützer umfasst ein Gehäuse, welches an der Fahrzeugachse befestigt ist. Eine hohle Gummibuchse ist in dem Gehäuse aufgenommen. Die Buchse ist an die äußere Oberfläche einer hohlen Metallbuchse angepasst bzw. formgepresst. Eine Federnut ist an der inneren Oberfläche der Buchse vorgesehen. Ein Ende einer Haltestange des Kotschützers wird von der Buchse aufgenommen und ist dort über einen Bolzen/eine Schraube gehalten, welche(r) in eine Gewindebohrung am Ende der Haltestange eingedreht wird. Die Haltestange weist eine Federnut/einen Schlitz auf. Die Federnut der Buchse und der Schlitz der Haltestange nehmen eine Passfeder bzw. ein Bauteil auf, welches eine Rotation der Haltestange relativ zu Buchse verhindert. Die Haltestange ist an einer gebogen ausgebildeten starren Kotschützerhalterung angeschweißt, welche mit dem Kotschützer verschraubt ist und welche die innere Oberfläche des Kotschützers versteift.

Die der Erfindung zugrunde liegende Aufgabe wird darin gesehen, eine Vorrichtung zur flexiblen Befestigung eines Kotschützers an einem Fahrzeug anzugeben und weiterzubilden, durch die die vorgenannten Probleme überwunden werden. Insbesondere soll eine kostengünstigere und einfacher ausgeführte Befestigungsvorrichtung angegeben werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Vorrichtung zur flexiblen Befestigung eines Kotschützers an einem Fahrzeug ist dadurch gekennzeichnet, dass das Rohr einen ersten Abschnitt und einen zweiten Abschnitt aufweist. Der erste Abschnitt des Rohrs ist von dem elastischen Teil aufnehmbar. Der zweite Abschnitt des Rohrs ragt von dem elastischen Teil nach außen zu einem äußeren Ende ab, welches von dem elastischen Teil beabstandet angeordnet ist. Das äußere Ende des Rohrs ist an einer äußeren Oberfläche der Halteeinrichtung befestigbar, insbesondere verklebbar oder verschweißbar.

In einer bevorzugten Ausführungsform weist der Kotschützer eine Vielzahl von Paaren von Vorsprüngen auf. Die Vorsprünge ragen von einer inneren Oberfläche des Kotschützers ab. Die Vorsprünge eines Paares von Vorsprüngen sind voneinander beabstandet angeordnet, und bilden einen Schlitz oder eine Ausnehmung dazwischen. Die Halteeinrichtung ist von dem Schlitz oder der Ausnehmung aufnehmbar.

Zur Befestigung des Kotschützers an der Haltevorrichtung könnten mindestens zwei Schellen vorgesehen sein. Eine Schelle könnte an einer inneren Oberfläche des Kotschützers befestigbar sein, um die Haltevorrichtung in dem Schlitz oder in der Ausnehmung zu halten bzw. befestigen.

Bevorzugt ist die Haltevorrichtung stellenweise gebogen ausgebildet, um eine Vielzahl von Abschnitten zu bilden, beispielsweise eine W- oder U-Form. Diese Abschnitte sind jeweils in einem Winkel zueinander angeordnet, und sind derart an dem Kotschützer befestigbar, dass der Kotschützer sich nicht um die Halteeinrichtung dreht oder um sie rotiert.

Die eingangs genannte Aufgabe wird auch durch die Vorrichtung zur flexiblen Befestigung eines Kotschützers an einem Fahrzeug gemäß Patentanspruch 5 gelöst, welche vorzugsweise eine Vorrichtung nach einem der Patentansprüche 1 bis 4 weiterbildet. Die erfindungsgemäße Vorrichtung ist dadurch gekennzeichnet, dass eine länglich ausgebildete Haltevorrichtung und ein Vibrationsisolator vorgesehen ist. Die Haltevorrichtung weist einen am Kotschützer befestigbaren Abschnitt auf. Der Vibrationsisolator umfasst ein starr ausgebildetes hohles Gehäuse, ein hohles elastisches Teil und ein starres zylinderförmig ausgebildetes Rohr. Das elastische Teil ist zumindest teilweise in dem Gehäuse aufnehmbar. Das Rohr weist einen ersten Abschnitt auf, welcher von dem elastischen Teil aufnehmbar ist. Das Rohr weist einen zweiten Abschnitt auf, welcher aus dem Gehäuse und dem elastischen Teil nach außen und zu einem äußeren Ende abragt. Der zweite Abschnitt des Rohrs nimmt ein Ende der Halteeinrichtung auf, wobei das äußere Ende des Rohrs an der äußeren Oberfläche der Halteeinrichtung befestigbar ist, insbesondere verklebbar oder verschweißbar.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Explosionsdarstellung eines ersten erfindungsgemäßen Ausführungsbeispiels und
- Fig. 2: eine schematische teilweise Schnittansicht des Ausführungsbeispiels aus Fig. 1.

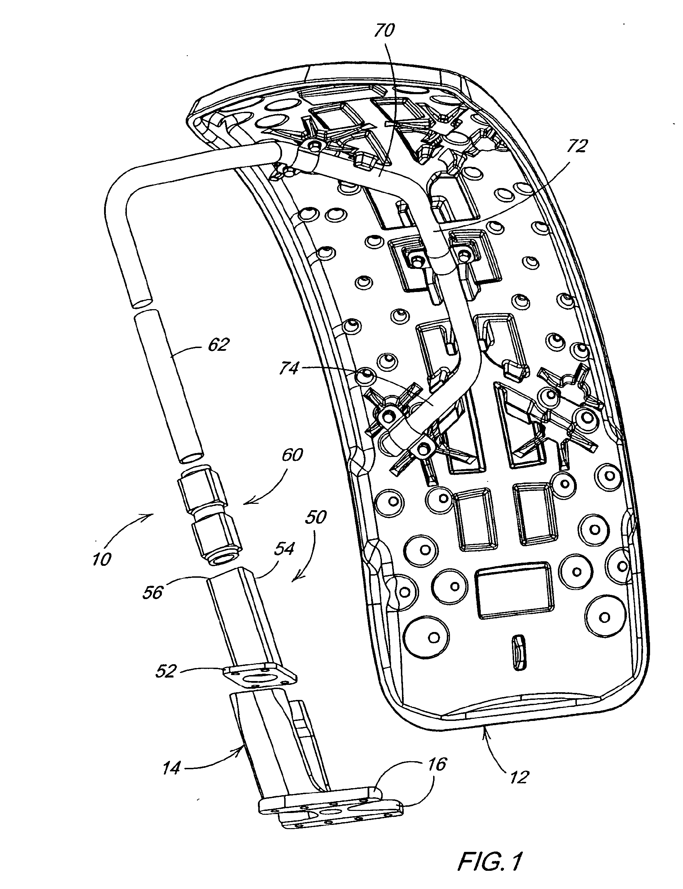

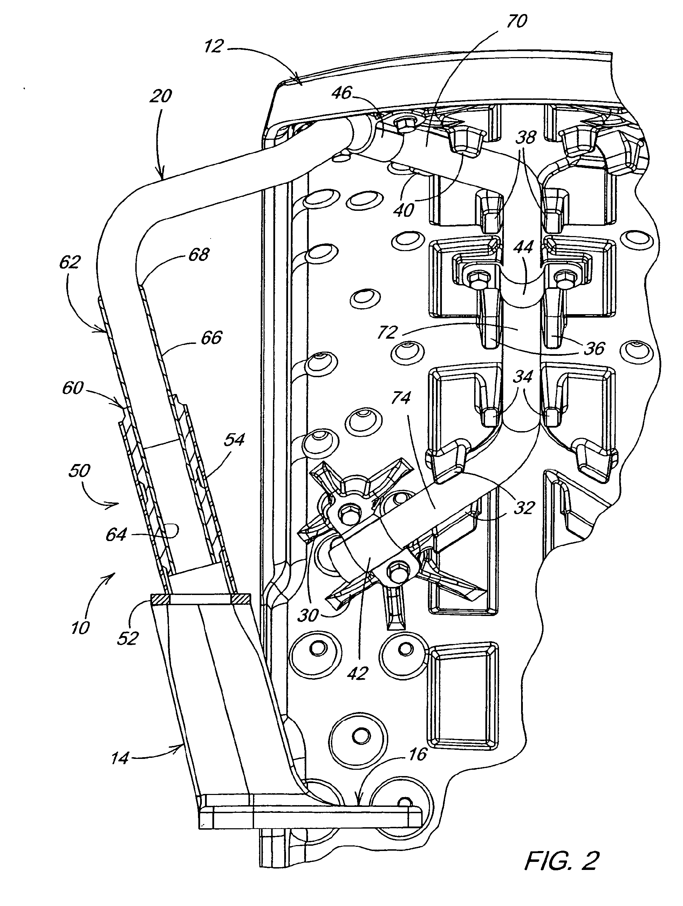

Die Fig. 1 und 2 zeigen eine flexible Befestigungsvorrichtung 10 für einen Kotschützer 12 an einem in den Fig. nicht gezeigten Fahrzeug. Die Befestigungsvorrichtung 10 umfasst ein fixierbares Halteteil 14, welches Füße 16 aufweist und welche ausgebildet sind, um an einem Abschnitt einer Fahrzeugachse (in den Fig. nicht gezeigt) in der Nähe eines lenkbaren Rads (ebenfalls nicht gezeigt) fixiert bzw. angeschraubt zu werden.

Ein solches Halteteil 14 wird derzeit bei Traktoren der Firma John Deere eingesetzt.

Eine zylindrisch ausgebildete, längliche Halteeinrichtung 20 oder Stange zur Halterungen des Kotschützers 12 - vorzugsweise in Form einer Vollstange beziehungsweise massiv ausgebildet - umfasst mehrere Biegungen und einen Abschnitt, welcher an dem Kotschützer 12 befestigt ist. Der Kotschützer 12 weist vorzugsweise einen hohlen blasgeformten Plastikkörper auf, welcher strukturelle Versteifungselemente aufweist und welcher aus einem Plastikmaterial gefertigt ist, welches einen hohen Polyethylen-Anteil aufweist. Die innere Oberfläche des Kotschützers 12 weist eine Vielzahl von Paaren von daran ausgebildeten Vorsprüngen 30, 32, 34, 36, 38, 40 auf. Jedes Paar von Vorsprüngen 30, 32, 34, 36, 38, 40 bildet einen Schlitz oder eine Ausnehmung, welche einen entsprechenden Abschnitt der Halteinrichtung 20 aufnimmt. Die Schellen 42, 44, 46 werden in entsprechende Augen verschraubt, welche an der inneren Oberfläche des Kotschützers 12 vorgesehen sind, so dass die Halteeinrichtung 20 an der inneren Oberfläche des Kotschützers 12 verklemmt bzw. daran befestigt ist. Die Halteeinrichtung 20 ist gebogen ausgebildet, um drei Abschnitte 70, 72, 74 zu bilden, welche sich jeweils in einem Winkel zueinander erstrecken und welche an dem Kotschützer 12 befestigbar sind, so dass der Kotschützer 12 nicht um die Halteeinrichtung 20 dreht beziehungsweise rotiert.

Ein Vibrationsisolator 50 umfasst eine Grundplatte 52, welche an dem Halteteil 14 befestigt ist, und ein hohles längliches Gehäuse 54, welches sich von einem ersten, an der Grundplatte 52 befestigten Ende zu einem zweiten offenen Ende 56 erstreckt. Das Gehäuse 54 weist eine nicht kreisförmige Form und/oder einen polygonförmigen Querschnitt auf, vorzugsweise rechteckig oder quadratisch. Ein hohles elastisches Teil aus Gummi 60 wird in dem Gehäuse 54 aufgenommen. Ein starres, zylinderförmig ausgebildetes Rohr 62 umfasst einen ersten Abschnitt 64, welcher von dem Gummiteil 60 aufgenommen wird, und einen zweiten Abschnitt 66, welcher von dem Gehäuse 54 und dem Gummiteil 60 nach außen abragt. Das Gummiteil 60 ist vorzugsweise an die äußere Oberfläche des ersten Abschnitts 64 des Rohrs 62 angepasst bzw. daran formgepresst. Das Gummiteil 60 weist eine äußere Oberfläche auf, welche im Wesentlichen der Form der inneren Wand des Gehäuses 54 entspricht. Der zweite Abschnitt 66 des Rohrs 62 nimmt ein Ende der Halteeinrichtung 20 auf. Der zweite Abschnitt 66 des Rohrs 62 umfasst ein äußeres Ende 68, welches an eine äußere Oberfläche der Halteeinrichtung 20 angeschweißt ist.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

Der Schutzumfung der erfindung wird nur durch die Beigefügten Ansprüche definiert.

## Patentansprüche

1. Vorrichtung zur flexiblen Befestigung eines Kotschützers an einem Fahrzeug, mit einem starr ausgebildeten hohlen Gehäuse (54), einem hohlen elastischen Teil (60), einem hohlen Rohr (62) und einer Halteeinrichtung (20) zur Halterung des Kotschützers (12), wobei das elastische Teil (60) von dem Gehäuse (54) aufnehmbar ist, wobei das hohle Rohr (62) zumindest teilweise von dem elastischen Teil (60) aufnehmbar und an dem elastischen Teil (60) anbringbar ist, und wobei die Halteeinrichtung (20) an dem Kotschützer (12) und an dem Rohr (62) befestigbar ist, **dadurch gekennzeichnet, dass** das Rohr (62) einen ersten Abschnitt (64) und einen zweiten Abschnitt (66) aufweist, dass der erste Abschnitt (64) des Rohrs (62) von dem elastischen Teil (60) aufnehmbar ist, dass der zweite Abschnitt (66) des Rohrs (62) von dem elastischen Teil (60) nach außen zu einem äußeren Ende (68) abragt, welches von dem elastischen Teil (60) beabstandet angeordnet ist, und dass das äußere Ende (68) des Rohrs (62) an einer äußeren Oberfläche der Halteeinrichtung (20) befestigbar - insbesondere verklebbar oder verschweißbar - ist.

2. Vorrichtung nach Anspruch 1, **dadurch gekennzeichnet, dass** der Kotschützer (12) eine Vielzahl von Paaren von Vorsprüngen (30, 32, 34, 36, 38, 40) aufweist, welche von einer inneren Oberfläche des Kotschützers (12) abragen, dass die Vorsprünge eines Paars von Vorsprüngen (30, 32, 34, 36, 38, 40) voneinander beabstandet angeordnet sind, um einen Schlitz oder eine Ausnehmung dazwischen zu bilden, und dass die Halteeinrichtung (20) von dem Schlitz oder der Ausnehmung aufnehmbar ist.

3. Vorrichtung nach Anspruch 2, **dadurch gekennzeichnet, dass** mindestens zwei Schellen (42, 44, 46) vorgesehen sind und dass eine Schelle (42, 44, 46) an einer inneren Oberfläche des Kotschützers (12) befestigbar ist, um die Haltevorrichtung (20) in dem Schlitz oder in der Ausnehmung zu befestigen.

4. Vorrichtung nach einem der vorhergehenden Ansprüche, **dadurch gekennzeichnet, dass** die Haltevorrichtung (20) stellenweise gebogen ausgebildet ist, um eine Vielzahl von Abschnitten (70, 72, 74) zu bilden, welche jeweils in einem Winkel zueinander angeordnet sind, und welche derart an dem Kotschützer (12) befestigbar sind, dass der Kotschützer (12) sich nicht um die Halteeinrichtung (20) dreht oder rotiert.

5. Vorrichtung zur flexiblen Befestigung eines Kotschützers an einem Fahrzeug, vorzugsweise nach einem der Ansprüche 1 bis 4, wobei eine länglich ausgebildete Haltevorrichtung (20) und ein Vibrationsisolator (50) vorgesehen ist, wobei die Haltevorrichtung (20) einen am Kotschützer (12) befestigbaren Abschnitt aufweist, wobei der Vibrationsisolator (50) ein starr ausgebildetes hohles Gehäuse (54), ein hohles elastisches Teil (60) und ein starres zylinderförmig ausgebildetes Rohr (62) aufweist, wobei das elastische Teil (60) zumindest teilweise in dem Gehäuse (54) aufnehmbar ist, **dadurch gekennzeichnet, dass** das Rohr (62) einen ersten Abschnitt (64) aufweist, welcher von dem elastischen Teil (60) aufnehmbar ist, dass das Rohr (62) einen zweiten Abschnitt (66) aufweist, welcher aus dem Gehäuse (54) und dem elastischen Teil (60) nach außen und zu einem äußeren Ende (68) abragt, dass der zweite Abschnitt (66) des Rohrs (62) ein Ende der Halteeinrichtung (20) aufnimmt und dass das äußere Ende (68) des Rohrs (62) an der äußeren Oberfläche der Halteeinrichtung (20) befestigbar - insbesondere verklebbar oder verschweißbar - ist.

## Claims

1. Apparatus for flexibly attaching a mudguard to a vehicle, with a rigidly formed hollow housing (54), a hollow elastic part (60), a hollow tube (62) and a support device (20) for supporting the mudguard (12), wherein the elastic part (60) can be received by the housing (54), wherein the hollow tube (62) can be received at least partially by the elastic part (60) and be fitted on the elastic part (60), and wherein the support device (20) can be fixed on the mudguard (12) and on the tube (52), **characterized in that** the tube (62) comprises a first section (64) and a second section (66), **in that** the first section (64) of the tube (62) can be received by the elastic part (60), **in that** the second section (66) of the tube (62) extends out from the elastic part (60) to an outer end (68) which is spaced from the elastic part (60), and **in that** the outer end (68) of the tube (62) can be fixed to an outer surface of the support device (20) - especially by an adhesive or by welding.

2. Apparatus according to claim 1, **characterized in that** the mudguard (12) has a plurality of pairs of projections (30, 32, 34, 36, 38, 40) which project from an inner surface of the mudguard (12), **in that** the projections of a pair of projections (30, 32, 34, 36, 38, 40) are spaced from one another in order to form a slot or recess therebetween, and **in that** the support device (20) can be received by the slot or recess.

3. Apparatus according to claim 2, **characterized in that** at least two clamps (42, 44, 46) are provided and **in that** a clamp (42, 44, 46) can be attached to an inner surface of the mudguard (12) in order to fix the support device (20) in the slot or recess.

4. Apparatus according to any of the preceding claims, **characterized in that** the support device (20) is bent in places in order to form a plurality of sections (70, 72, 74) which are arranged at angles to one another and which can be so fixed on the mudguard (12) that the mudguard (12) does not turn or rotate about the support device (20).

5. Apparatus for flexibly attaching a mudguard to a vehicle, preferably according to any of claims 1 to 4, wherein a support device (20) of elongated form and a vibration isolator (50) are provided, wherein the support device (20) has a section which can be fixed on the mudguard (12), wherein the vibration isolator (50) comprises a rigidly formed hollow housing (54), a hollow elastic part (60) and a rigid cylindrically formed tube (62), wherein the elastic part (60) can be received at least partially in the housing (54), **characterized in that** the tube (62) comprises a first section (64) which can be received by the elastic part (60), **in that** the tube (62) comprises a second section (66) which extends out from the housing (54) and the elastic part (60) to an outer end (68), **in that** the second section of the tube (62) receives one end of he support device (20) and **in that** the outer end (68) of the tube (62) can be fixed to the outer surface of the support device (20) - especially by an adhesive or by welding.

## Revendications

1. Dispositif pour la fixation flexible d'un garde-boue sur un véhicule à moteur, comportant un boîtier creux (54), réalisé sous forme rigide, une partie élastique (60) creuse, un tube creux (62) et un dispositif de support (20) pour supporter le garde-boue (12), la partie élastique (60) pouvant être reçue dans le boîtier (54), le tube creux (62) pouvant être reçu au moins en partie dans la partie élastique (60) et pouvant être assemblé à la partie élastique (60), et le dispositif de support (20) pouvant être fixé contre le garde-boue (12) et contre le tube (62), **caractérisé en ce que** le tube (62) comporte une première partie (64) et une deuxième partie (66), **en ce que** la première partie (64) du tube (62) peut être reçue dans la partie élastique (60), **en ce que** la deuxième partie (66) du tube (62) s'avance en saillie depuis la partie élastique (60) vers l'extérieur vers une extrémité extérieure (68), qui est agencée à distance de la partie élastique (60), et **en ce que** l'extrémité extérieure (68) du tube (62) peut être fixée - en particulier collée ou soudée - sur une surface extérieure du dispositif de support (20).

2. Dispositif selon la revendication 1, **caractérisé en ce que** le garde-boue (12) comporte une pluralité de paires de saillies (30, 32, 34, 36, 38, 40), qui s'avancent en saillie sur une surface intérieure du garde-boue (12), **en ce que** les saillies d'une paire de saillies (30, 32, 34, 36, 38, 40) sont agencées à distance l'une de l'autre afin de former entre elles une fente ou un évidement, et **en ce que** le dispositif de support (20) peut être reçu dans ladite fente ou ledit évidement.

3. Dispositif selon la revendication 2, **caractérisé en ce qu'**il est prévu au moins deux colliers (42, 44, 46) et **en ce qu'**un collier (42, 44, 46) peut être fixé sur une surface intérieure du garde-boue (12), afin de fixer le dispositif de support (20) dans la fente ou l'évidement.

4. Dispositif selon l'une quelconque des revendications précédentes, **caractérisé en ce que** le dispositif de support (20) est coudé à certains emplacements afin de former une pluralité de parties (70, 72, 74), qui sont agencées chacune en angle par rapport à l'autre et qui peuvent être fixées contre le garde-boue (12), de telle sorte que le garde-boue (12) ne peut pas tourner ou être entraîné en rotation autour du dispositif de support (20).

5. Dispositif pour la fixation flexible d'un garde-boue sur un véhicule à moteur, de préférence selon l'une quelconque des revendications 1 à 4, dans lequel il est prévu un dispositif de support (20) de forme allongée et un isolateur de vibrations (50), le dispositif de support (20) comportant une partie pouvant être fixée contre le garde-boue (12), l'isolateur de vibrations (50) comportant un boîtier (54) creux, réalisé sous forme rigide, une partie élastique (60) creuse et un tube (62) rigide, de forme cylindrique, la partie élastique (60) pouvant être reçue au moins en partie dans le boîtier (54), **caractérisé en ce que** le tube (62) comporte une première partie (64), qui peut être reçue dans la partie élastique (60), **en ce que** le tube (62) comporte une deuxième partie (66), s'avançant en saillie hors du boîtier (54) et de la partie élastique (60) vers l'extérieur et vers une extrémité extérieure (68), **en ce que** la deuxième partie (66) du tube (62) reçoit une extrémité du dispositif de support (20), et **en ce que** l'extrémité extérieure (68) du tube (62) peut être fixée - en particulier collée ou soudée - sur la surface extérieure du dispositif de support (20).
